# EUROPEAN PATENT APPLICATION

(11) **EP 4 567 076 A1**
(43) Date of publication of application: **11.06.2025**
(21) Application number: 24217052.0
(22) Date of filing: 03.12.2024
(51) Int. Cl.: C09D 5/10, C09D 5/00

(54) **COMPOSITION**

(30) Priority: 04.12.2023 IT 202300025782
(71) Applicant: Pulverit Polska S.p. z o.o., 43100 Tychy (PL)
(72) Inventor: BELLUCCO, Francesco, 20138 Milan (IT)
(74) Representative: De Gregori, Antonella

(57) **Abstract**

The present invention relates to a composition with a low metallic zinc content suitable for imparting anti-corrosion properties, the relative preparation process, its use for imparting anti-corrosion properties to a metal substrate and substrates coated by said composition.

## Description

The present invention relates to a composition with a low metallic zinc content suitable for imparting anti-corrosion properties, the relative preparation process, its use for imparting anti-corrosion properties to a metal substrate and substrates coated with said composition.

### STATE OF THE ART

As is known, the term corrosion indicates a natural and irreversible process of progressive alteration of the surface of a material or substrate by atmospheric agents or other aggressive means, which leads to a progressive alteration of the characteristics (often not only surface) of said material.

Corrosion typically occurs in various forms and can be classified according to the deterioration of the metal surface. In particular, the corrosion of metals can be defined as a process of degradation and interaction with other elements present in the environment: metals and alloys are at a higher energy level than the corresponding minerals, therefore under certain environmental conditions, they tend to return to the most stable state present in nature, usually that of oxide, hydrate or salt. Corrosion usually takes place in metal substrates, but it can also occur in materials other than metals, such as ceramics or polymers.

Corrosion (which can be concentrated locally or extend over a large area) is usually associated with the loss of useful properties of the substrate including external appearance, mechanical and/or chemical resistance, impermeability to liquids and/or gases.

To effectively prevent corrosion of metal substrates, different types of coatings (called anti-corrosion coatings) have been developed, which are currently of great importance. Corrosion, in fact, drastically reduces the life of metal substrates and can also lead to failures of structural elements, with consequent high economic costs, both in terms of direct damage (for example the cost of damaged materials that must be replaced and the cost of the replacement intervention) and indirect damage (for example the cost of production loss).

Known anti-corrosion coatings normally contain high quantities (up to 90% by weight) of "sacrificial" compounds (called corrosion inhibitors), that is, compounds that are more active than the material (or metal) to be protected. These compounds are dispersed in an organic resin (usually an epoxy resin) that acts as a binding agent.

As the anticorrosion performance of a coating mainly depends on the quantities of corrosion inhibitors present in the coating, it is in fact necessary to use high quantities of these components.

The use of high quantities/concentrations of these components (and in particular of metallic zinc, which is the most widely-used corrosion inhibitor) is however accompanied by particularly significant disadvantages or limitations, in particular from an economic (due to the high costs related to raw materials), and an ecological point of view and the yield of the coating process.

High quantities of metallic zinc are in fact accompanied by high specific weight values of the coating due to the density of the zinc (equal to 7,140 g/cm³), thus lowering the yield of the coating process in terms of surface of coated substrate per quantity of material used.

Furthermore, high concentrations of metallic zinc make it difficult to apply the anti-corrosion coating onto the substrate: it has in fact been observed that the presence of metallic particles in a concentration by weight higher than 20% means that during the spraying phase of the anti-corrosion composition onto the substrate and the subsequent ionization phase of the powder, there is a separation between the metallic zinc (which tends not to become deposited on the piece) and the organic part of the resin that acts as binder (which however, as it able to be charged electrostatically and as it is lighter, tends to adhere to the carrier which is at zero electrical potential, i.e. earthed) during the spraying step of the anti-corrosion composition onto the substrate and the subsequent ionization phase of the powder As a result, the coating that is actually applied to the surface of the treated substrate has a lower fraction of metallic zinc than the starting composition.

In order to solve this problem, various methods have been developed in which the substrate to be coated is heated in such a way that the powder melts immediately upon contact with its surface, consequently also fixing the zinc (which, once it reaches the surface of the coating, will then bind to the molten polymer thanks to the adhesive action of the binding agent used in the formulation). These methods however have various critical issues, including, for example, the high process costs.

The present invention therefore aims at overcoming the disadvantages and solving the problems that characterize the sector.

### OBJECT OF THE INVENTION

The present invention relates to a composition (CO) comprising or consisting of:
- an epoxy resin having an EEW value (epoxy equivalent weight) ranging from 400 to 950;
- at least one additive (AD) consisting of carbon nanotubes;
- a curing agent;
- metallic zinc and,
- optionally, one or more additional additives selected from the group consisting of pigments, degassing agents, anti-crater agents, dispersing agents, filling agents, corrosion inhibitors other than metallic zinc, accelerating agents, glass flakes and mixtures thereof,
wherein the concentration by weight of metallic zinc with respect to the total weight of the composition (CO) ranges from 2.5 to 15%, more preferably from 2.75 to 10%, even more preferably from 3 to 5%.

The present invention also relates to a process for preparing the composition (CO) described above, wherein said process comprises the following steps:
a) dispersing the additive (AD), preferably consisting of single-walled carbon nanotubes, optionally together with a dispersing agent, preferably a wax, even more preferably amide wax and/or polyethylene wax, in a molten or liquid epoxy resin;
b) mixing so as to obtain a homogeneous mixture (M);
c) optionally, adding to the homogeneous mixture (M) obtained in step a) a further portion of epoxy resin in solid form so that the total EEW value of the epoxy resin introduced in step a) ranges from 400 to 950, more preferably from 600 to 850;
d) cooling the homogeneous mixture (M) obtained until it solidifies;
e) dry mixing an epoxy resin together with a curing agent, the solid homogeneous mixture (M) and metallic zinc and, optionally, one or more further additives selected from the group consisting of pigments, degassing agents, anti-crater agents, dispersing agents, filling agents, corrosion inhibitors other than metallic zinc, accelerating agents, glass flakes and mixtures thereof until a homogeneous mixture is obtained (MD);
f) hot-extruding the mixture (MD) obtained in the previous step and subjecting it to calendering;
g) cooling and grinding the extruded homogeneous mixture (MD);
h) adding lamellar metallic zinc to the ground homogeneous mixture (MD) in such a quantity that the total concentration of metallic zinc by weight with respect to the total weight of the composition (CO) ranges from 2.5 to 15%, more preferably from 2.75 to 10%, even more preferably from 3 to 5%.

The present invention also relates to a process for preparing the composition (CO) described above, wherein said process comprises the following steps:
a) dispersing the additive (AD), preferably consisting of single-walled carbon nanotubes, together with a dispersing agent, preferably a wax, even more preferably amide wax and/or polyethylene wax, in a molten epoxy resin;
b) mixing the dispersion obtained under heat;
c) cooling and grinding the extruded dispersion;
d) adding the dispersion obtained in step c) to a premix comprising an epoxy resin, a curing agent, metallic zinc and, optionally, one or more further additives selected from the group consisting of pigments, degassing agents, anti-crater agents, dispersing agents, filling agents, corrosion inhibitors other than metallic zinc, accelerating agents, glass flakes and mixtures thereof;
e) hot-extruding the mixture (MD) obtained in the previous step and subjecting it to calendering;
f) cooling and grinding the extruded homogeneous mixture (MD);
g) adding lamellar metallic zinc to the ground homogeneous mixture (MD) in such a quantity that the total concentration of metallic zinc by weight with respect to the total weight of the composition (CO) ranges from 2.5 to 15%, more preferably from 2.75 to 10%, even more preferably from 3 to 5%.

The present invention further relates to a coating method for imparting anti-corrosion properties to a substrate, preferably of a metallic type, wherein said method comprises a step wherein at least a part of the surface of the substrate is treated with the composition (CO) described above.

The present invention also relates to a substrate, preferably of a metallic type, at least partly coated with the composition (CO) described above, that can be obtained with the above-mentioned method.

### DESCRIPTION OF THE DRAWINGS

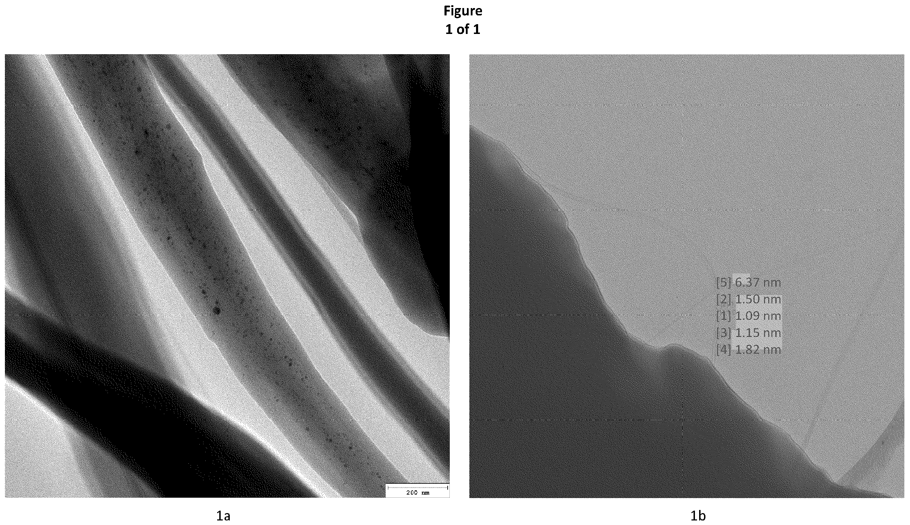

Figure 1 shows the nanotube filaments in the polymer matrix of formulation 1 (see Example 1) visible by means of an optical scanning microscope - SEM (Figure 1a) and relative enlargement (Figure 1b).

### DETAILED DESCRIPTION OF THE INVENTION

It has been surprisingly found that thanks to the composition (CO) according to the present invention it is possible to apply an anti-corrosion coating that has significant advantages compared to the known art. In particular, thanks to the composition (CO) according to the present invention it is possible:
- to use smaller quantities of metallic zinc with respect to the known art (with advantages in terms of costs and environmental impact);
- to obtain a greater anti-corrosion effect and barrier effect with respect to the coatings according to the state of the art: in particular, the replacement of metallic zinc with lamellar fillers (deriving from the presence of the additive (AD) consisting of carbon nanotubes) increases the barrier effect which makes the coating more waterproof compared to the same product containing metallic zinc;
- to increase the yield of the coating process in terms of surface of coated substrate per quantity of material used (thanks to the reduced specific weight of the composition (CO) according to the present invention compared to the prior art);
- to avoid the need for heating the substrate to facilitate the adhesion of the metallic zinc on its surface.

In one embodiment, said epoxy resin has an EEW (epoxy equivalent weight) value ranging from 600 to 850.

In a preferred embodiment, said epoxy resin is selected from poly(Bisphenol A - co - epichlorohydrin), end-capped glycidyl, poly(Bisphenol F - co - epichlorohydrin), and epoxy-phenol novolacs.

Said epoxy resin can be present in concentrations by weight with respect to the total weight of the composition (CO) that range for example from 10 to 50%, more preferably from 20 to 40%, even more preferably from 25 to 35%.

In one embodiment, the epoxy resin has a kinematic viscosity ranging from 370 to 550 mm²/s (corresponding to a Gardner Holdt viscosity (25°C) ranging from O to T), more preferably from 400 to 500 mm²/s (corresponding to a Gardner Holdt viscosity (25°C) ranging from P to S), even more preferably equal to 470 mm²/s (corresponding to a Gardner Holdt viscosity (25°C) equal to R), and/or a density ranging from 0.5 to 2 g/cm³, more preferably from 1.15 to 1.20 g/cm³.

In a preferred embodiment, the epoxy resin has a kinematic viscosity ranging from 400 to 500 mm²/s and/or a density ranging from 1.15 to 1.20 g/cm³.

In one embodiment, the quantity by weight of said additive (AD) with respect to the total weight of the composition (CO) ranges from 0.01 to 2.5%, more preferably from 0.05 to 1.5%. In a preferred embodiment, said additive (AD) consists of single-walled carbon nanotubes (SWCNT).

In an even more preferred embodiment, said single-walled nanotubes have:
- a diameter ranging from 1 to 5 nm, more preferably from 1.2 to 2.0 nm, even more preferably equal to 1.6 nm and/or
- a length greater than 5 micrometers, more preferably ranging from 10 to 40 micrometers and/or
- a wall thickness ranging from 0.15 to 0.40 nm and/or
- a maximum size of the agglomerates not exceeding 500 µm and/or
- a total fraction of the agglomerates not exceeding 0.04% by weight with respect to the total weight of the composition (CO) and/or
- a resistivity, tested in an LDPE matrix comprising single-walled carbon nanotubes in a quantity equal to 0.1% by weight with respect to the total weight of the matrix and with a melt flow index equal to 20, ranging from 5*10^4 - 5*10^6 ohm* cm.

Said single-walled nanotubes more preferably have:
- a thickness equivalent to the size of a carbon atom (i.e. approximately 0.18 nm) and/or
- a specific area ranging from 100 m²/g to 500 m²/g, more preferably equal to 300 m²/g and/or
- a humidity content by weight with respect to the total weight of the additive (AD) not exceeding 5%.

In one embodiment, said curing agent is selected from phenolic curing agents and epoxy curing agents.

Said curing agents may in turn contain polymerization catalysts and rheological modifiers (e.g. based on polyacrylates).

The concentration by weight of the curing agent with respect to the total weight of the composition (CO) ranges from 8 to 18%, more preferably from 11 to 13%. In particular, the quantity of curing agent varies depending on the epoxy equivalent of the resin used and in relation to the hydroxyl equivalent weight of the phenolic curing agent used.

In a preferred embodiment, in said composition (CO):
- the epoxy resin has an EEW value that ranges from 600 to 850;
- the weight concentration of the additive (AD) with respect to the total weight of the composition (CO) ranges from 0.05 to 1.5% and said additive is composed of single-walled carbon nanotubes;
- the weight concentration of the curing agent with respect to the total weight of the composition (CO) is within the range of 11-13%;
- the weight concentration of metallic zinc with respect to the total weight of the composition (CO) ranges from 3 to 5%.

More preferably, said epoxy resin has a kinematic viscosity ranging from 400 to 500 mm²/s and/or a density ranging from 1.15 to 1.20 g/cm³.

Even more preferably, said single-walled nanotubes have:
- a diameter ranging from 1 to 5 nm, more preferably from 1.2 to 2.0 nm, even more preferably equal to 1.6 nm and/or
- a length greater than 5 micrometers, more preferably ranging from 10 to 40 micrometers and/or
- a wall thickness ranging from 0.15 to 0.40 nm and/or
- a maximum size of the agglomerates not exceeding 500 µm and/or
- a total fraction of the agglomerates not exceeding 0.04% by weight with respect to the total weight of the composition (CO) and/or
- a resistivity, tested in an LDPE matrix comprising single-walled carbon nanotubes in a quantity equal to 0.1% by weight with respect to the total weight of the matrix and with a melt flow index equal to 20, ranging from 5*10^4 - 5*10^6 ohm*cm.

In a further preferred embodiment, said composition (CO) is composed of:
- an epoxy resin having an EEW value ranging from 400 to 950;
- at least one additive (AD) consisting of carbon nanotubes;
- a curing agent;
- metallic zinc and
- optionally, a dispersing agent, a filling agent, a degassing agent and/or an anti-crater additive,
wherein the concentration by weight of metallic zinc with respect to the total weight of the composition (CO) ranges from 2.5 to 15%, more preferably from 2.75 to 10%, even more preferably from 3 to 5%.

In one embodiment, said composition (CO) further contains one or more additional additives selected from the group consisting of pigments, corrosion inhibitors other than metallic zinc, accelerating agents, glass flakes and mixtures thereof.

Said additional additives can be present in conventional quantities known in the field.

Said pigments can be selected for example from titanium dioxide, iron oxide (yellow, red, black), chromium oxide, nickel titanate, chromium titanate, bismuth vanadate (PY184), organic pigments and mixtures thereof. Said pigments can be present, for example, in a concentration by weight with respect to the total weight of the composition (CO) ranging from 0.01 to 80%, more preferably from 1 to 25%.

Said degassing agents can be selected for example from benzoin, N,N'-ethylenedi(stearamide), micronized amide waxes, micronized polypropylene waxes. Said degassing agents can be present, for example, in a concentration by weight with respect to the total weight of the composition (CO) ranging from 0.01 to 10%, more preferably from 1 to 5%.

Said anti-crater agents (which act as surface-tension modifiers) can be selected for example from polyacrylates, surface-tension modifiers, fluorinated polyacrylates, surface tension modifiers, silicone polymers, surface tension modifiers. Said anti-crater agents can be present, for example, in a concentration by weight with respect to the total weight of the composition (CO) ranging from 0.01 to 30%, more preferably from 1 to 10%.

Said dispersing agents can be selected for example from waxes (in particular polyethylene wax, modified polyethylene waxes, amide waxes, zinc salts of hydrophobic sulfonic acids, or polymers based on poly(2-vinylpyridine)-β-poly(β-caprolactone). Said dispersing agents can be present, for example, in a concentration by weight with respect to the total weight of the composition (CO) ranging from 0.01 to 10%, more preferably from 1 to 5%.

Said filling agents can be selected for example from talc, calcium metasilicate, muscovite, barite, borosilicates and mixtures thereof. Said filling agents can be present, for example, in a concentration by weight with respect to the total weight of the composition (CO) ranging from 0.01 to 95%, more preferably from 1 to 50%, even more preferably from 1 to 30%.

Said corrosion inhibitors other than metallic zinc can be selected for example from zinc phosphate (wherein the zinc is not in the metallic state, but rather combined), phosphate esters, calcium/magnesium phosphates, aluminum/zinc polyphosphates. Said corrosion inhibitors can be present, for example, in a concentration by weight with respect to the total weight of the composition (CO) ranging from 0.01 to 20%, more preferably from 1 to 10%.

Said accelerating agents can for example be dimethyl imidazole, methyl imidazole, dimethyl benzylamine, benzyltrimethylammonium chloride and mixtures thereof. Said accelerating agents can be present, for example, in a concentration by weight with respect to the total weight of the composition (CO) ranging from 0.01 to 5%, more preferably from 0.1 to 1%.

In one embodiment, the composition (CO) comprises the following ingredients:

**TABLE 1**

| | **CAS number** | **% by weight** | **Function** |
|---|---|---|---|
| **Modified low-molecular-weight solid epoxy resin novolac - poly(bisphenol A-co-epichlorohydrin), with glycidyl end (poly(bisphenol A-co-epichlorohydrin), end-capped glycidyl)(EPONAC^{®} 85)** | 25036-25-3 | **32.5** | **Binding agent** |
| **Phenolic curing agent based on unmodified solid reaction product of liquid epoxy resin and BPA (SIRION^{®} VP 2081)** | 80-05-07 | **11.05** | **Curing agent** |
| Polyethylene wax | 9002-88-4 | 0.3 | Dispersing agent |
| Benzoin | 119-53-9 | 0.4 | Degassing agent |
| BYK-360 P | | 1 | Anti-crater agent |
| Barite | 7727-43-7 | 38.1125 | Filler |
| Talc | 238-877-9 | 3.75 | Filler |
| Zinc phosphate | 7779-90-0 | 5 | Corrosion inhibitor |
| Titanium dioxide | 13463-67-7 | 3.75 | Pigment agent |
| Spherical metallic zinc powder | 7440-66-6 | 1.5 | Corrosion inhibitor |
| Black iron oxide PBk 11 | 1309-38-2 | 1 | Pigment agent |
| SWCNT | 308068-56-6 | 0.1375 | "ADDITIVE" |
| Lamellar metallic zinc flakes | 7440-66-6 | 1.5 | Corrosion Inhibitor |
| Total | | 100 | |

The composition (CO) according to one of the embodiments indicated above can have a particle size lower than 200 microns, more preferably lower than 100 microns. Even more preferably, the composition (CO) according to one of the embodiments indicated above can have a particle-size distribution wherein:
- D40 = 30 microns;
- D90 = 73 microns;
- D100 = 100 microns.

The present invention further relates to a process for preparing the composition (CO) according to the present invention, wherein said process comprises the following steps:
a) dispersing the additive (AD), preferably consisting of single-walled carbon nanotubes, optionally together with a dispersing agent, preferably a wax, even more preferably amide wax and/or polyethylene wax, in a molten or liquid epoxy resin;
b) mixing so as to obtain a homogeneous mixture (M);
c) optionally, adding to the homogeneous mixture (M) obtained in step a) a further portion of epoxy resin in solid form so that the total EEW value of the epoxy resin introduced in step a) ranges from 400 to 950, more preferably from 600 to 850;
d) cooling the homogeneous mixture (M) obtained until it solidifies;
e) dry mixing an epoxy resin together with a curing agent, the solid homogeneous mixture (M) and powdered metallic zinc and, optionally, one or more further additives selected from the group consisting of pigments, degassing agents, anti-crater agents, dispersing agents, filling agents, corrosion inhibitors other than metallic zinc, accelerating agents, glass flakes and mixtures thereof, until a homogeneous mixture is obtained (MD);
f) hot-extruding the mixture (MD) obtained in the previous step and, optionally, subjecting it to calendering;
g) cooling and grinding the extruded homogeneous mixture (MD);
h) adding lamellar metallic zinc to the ground homogeneous mixture (MD) in such a quantity that the total concentration of metallic zinc by weight with respect to the total weight of the composition (CO) ranges from 2.5 to 15%, more preferably from 2.75 to 10%, even more preferably from 3 to 5%.

In one embodiment, the epoxy resin is melted at a temperature ranging from 150 to 180°C so as to make the viscosity of the medium low enough to allow the nanotubes to be dispersed.

In one embodiment, the additive (AD) (preferably consisting of single-walled carbon nanotubes) is added to the molten epoxy resin in a dispersed form by previously putting said additive (AD) in contact with at least one dispersing agent. In this way, the additive (AD) becomes easier to manipulate, thus allowing a more rapid and homogeneous incorporation into the mixture. In addition, this embodiment allows the additive (AD) to be stabilized by reducing re-agglomeration phenomena (and, consequently, maintaining low levels of viscosity of the composition (CO)).

Said dispersing agent is preferably a wax, even more preferably polyethylene wax. Said additive (AD) can be dispersed in the dispersing agent by techniques known in the state of the art, for example by mixing (optionally hot) in special extruders by means of mixing screws.

The metallic zinc is preferably present in powder form.

In an alternative embodiment, said composition (CO) is obtained through the following steps:
a) dispersing the additive (AD), preferably consisting of single-walled carbon nanotubes, together with a dispersing agent, preferably a wax, even more preferably amide wax and/or polyethylene wax, in a molten epoxy resin;
b) mixing the resulting dispersion under heat;
c) cooling and grinding the extruded dispersion;
d) adding the dispersion obtained in step c) to a premix comprising an epoxy resin, a curing agent, metallic zinc and, optionally, one or more further additives selected from the group consisting of pigments, degassing agents, anti-crater agents, dispersing agents, filling agents, corrosion inhibitors other than metallic zinc, accelerating agents, glass flakes and mixtures thereof;
e) hot-extruding the mixture (MD) obtained in the previous step and, optionally, subjecting it to calendering;
f) cooling and grinding the extruded homogeneous mixture (MD);
g) adding lamellar metallic zinc to the ground homogeneous mixture (MD) in such quantity that the total concentration of metallic zinc by weight with respect to the total weight of the composition (CO) ranges from 2.5 to 15%, more preferably from 2.75 to 10%, even more preferably from 3 to 5%.

The additive (AD) is preferably dispersed via a paddle mixer.

The metallic zinc is preferably present in powder form.

The present invention also relates to the use of the composition (CO) described above for imparting anti-corrosion properties to a substrate.

In particular, the present invention relates to a coating method for imparting anti-corrosion properties to a substrate, preferably of a metallic type, wherein said method comprises a step wherein at least a part of the surface of the substrate is treated with the composition (CO) described above.

Said method therefore comprises a step wherein said substrate is put in contact with the composition (CO). This contact step can be effected through techniques known in the field. Said composition (CO) can be applied to the substrate, for example, through spraying techniques.

Alternatively, said composition (CO) can be applied to the substrate by means of an electrostatic method, for example by the "Corona" method. This method uses friction energy to generate a voltage of up to 100 kV. The cascading flow of powder is passed through an electrode located at the tip of the gun. The high voltage at the tip of the gun produces a corona, the air is ionized and an electric field is created between the electrode and the earthed object. The corona is usually negatively charged causing a flow of negative ions from the gun to the substrate. The powder particles pick up a negative charge from the corona and the ionized air molecules and then flow towards the earthed substrate, where they are firmly held by electrostatic attraction.

The film thickness is controlled by the combination of electric field strength, gravity, air pressure and powder concentration. There are many types and forms of Corona spray guns, including electrostatic bells and disks.

Alternatively, the composition (CO) can be applied to the substrate by means of a triboelectric method. In this method, the powder particles are charged by friction while passing through a PTFE tube. During this process, the powder particles lose electrons and become positively charged. The particles of charged powder move along the air flow towards the earthed substrate. The cloud of charged powder creates a field and an electrical attraction between the powder and the substrate.

The extent of the friction charge is regulated by the volume of powder conveyed into the tube and the rate at which it passes through it. Both of these parameters can be controlled by the operator in order to obtain the desired thickness and finish.

The airflow and electromagnetic forces between the gun and the substrate are normally lower in the case of triboelectric applications with respect to electrostatic applications, which is why they offer better performances in the painting of substrates that have recesses or Faraday cages.

Alternatively, the composition (CO) can be applied to the substrate by fluidized-bed immersion. In this method, the substrate is preheated to a temperature above the melting point of the powder. The substrate is then immersed in the cloud or just above the fluidized bed of powder. The powder melts and forms a coating on the hot surface. When the substrate is removed from the fluidized bed, it can be passed through another oven to fully polymerize the powder. The thickness of the film varies according to the initial temperature of the substrate when it enters the fluidized bed and the time it spends in the fluidized bed with a temperature above the melting point of the powder.

Said spraying is preferably effected at temperatures that are above the melting point of the powder, which can range from 50°C to 90°C preferably from 60°C to 80°C.

The thickness of the coating applied on the substrate according to the process of the invention usually ranges from 50 to 300 microns, preferably from 80 to 150 microns.

In one embodiment, the step in which the substrate is treated with the composition (CO) according to the present invention is followed by a gelling step, preferably carried out through heat treatment at temperatures ranging from 100 to 120°C, preferably around 110°C.

The substrate thus obtained can also be further treated to apply additional coatings according to the different applications and/or desired characteristics (e.g. colour, resistance to chemicals, etc.) and subsequent final polymerization.

The present invention further relates to a substrate, preferably of a metallic type, coated (at least in a portion thereof) with the composition (CO) described above, that can be obtained with the above-mentioned method.

In other words, the present invention also relates to a substrate, preferably of a metallic type (for example iron or its alloys), coated (at least in a portion thereof) with the composition (CO) described above..

In particular, it has been observed that the composition (CO) according to the present invention is particularly suitable for coating metal substrates, such as iron and its alloys, copper, silver, titanium and mixtures thereof. It is also possible, however, to apply the composition (CO) on other types of substrates such as ceramics and glass.

Furthermore, the solution according to the present invention, i.e. the composition (CO), has a further application advantage. Thanks to its high electrical conductivity and its extreme reactivity, this composition can in fact be over-painted with a second coat of top-coat, without the need for effecting a pre- gelling step. The compositions according to the state of the art, on the contrary, always require a pre-gelling step before applying a second coat of top-coat: i.e. they require an additional step which consists of passing the product through the oven to melt the primer powder in order to fix it onto the carrier, it is then possible to repaint with a second layer and the whole product is finally completely polymerized.

The composition (CO) according to the present invention, on the other hand, allows the primer (i.e. the composition itself) to be directly applied onto the carrier and the top-coat can be subsequently applied onto the same without any intermediate heat treatment and without the primer having any influence on the top-coat in aesthetic terms. This obviously allows a saving in terms of time (the pre-gelling step required by the state of the art is avoided) and in economic terms (the energy costs due to this pre-gelling step of the primer are eliminated).

### Example 1 - Preparation of Formulation 1

A sample of single-walled nanotubes (CAS number 308068-56-6) weighing 23.55 g (Nanotube length > 5 µm, nanotube diameter: 1.6 nm, nanotube thickness 0.17 nm) was dispersed in 2970.45 g of EPONAC 85, adding 6 g of Lanco A1601 (polyamide wax). The dispersion was effected in a flask by mixing the components brought to melting at a temperature of 170°C. The dispersion was stirred for 30 minutes with an impeller rate of 360 rpm. At the end of 30 minutes, it was discharged onto a cooling belt (belt temperature ranging from 5°C to 10°C) followed by crushing the material using a rotating mechanical breaker. The resulting mixture has a nanotube weight concentration of 0.785%. Using this mixture as a "nanotube master", a dry mixture of the components was prepared according to the formula indicated hereunder:

**TABLE 2**

| **Component** | **Quantity** |
|---|---|
| Eponac 85 | 325.000 |
| Lanco A1601 | 0.35 |
| Sirion VP 2081 | 110.500 |
| Deurex E11 | 3.000 |
| Benzoin (CAS 119-53-9) | 4.000 |
| Byk 360P | 10.000 |
| Baristar 8415 | 381.125 |
| Luzenac 10M0 | 37.500 |
| Nubirox 106 | 50.000 |
| Kronos 2090 | 37.500 |
| Poewer Zinc 4P16 | 15.000 |
| Bayferrox 306 | 10.000 |
| SWCNT | 1.375 |

In particular, 175.159 g of "nanotube master" (equivalent to 1.375 g of SWCNT) were dry mixed together with the other components indicated in Table 2 (in addition to the remaining quantity of Eponac 85, equal to 150.866 g) in a turbo mixer at a speed of 1,500 rpm for a time of 4 minutes at a temperature never exceeding 40°C.

The closely-mixed mixture thus obtained was extruded using a classic twin-screw extruder for powder-coating products with a minimum temperature set of 20°C in the feeding zone which gradually increases up to 120°C in the operating zone and the outlet head (for example according to a 10-zone scheme from 20°C to 60°C, from 60°C to 80°C, from 80°C to 100°C, from 100°C to 120°C and then from 120°C to 100°C, wherein the cold zone at 20°C is the feeding zone whereas the last zone at 100°C is the extruder head from which the molten and mixed material exits), thus obtaining an extruded product with a TMP (temperature of melted phase, i.e. the temperature of the molten material at the outlet of the extruder) ranging from 125°C to 135°C. Once extruded, the material was calendered and cooled on a stainless-steel belt cooled with water to 5°C and then reduced to flakes using a rotating mechanical breaker. The material reduced to flakes was subsequently ground with a classic grinding plant (pin mill equipped with a classifier) obtaining an average particle-size distribution equal to:
D40 = 30 microns
D90 = 73 microns
D100 = 100 microns.

15 g of lamellar metallic Zinc dry mixed in a slow mixer of the "Viani" type, for a time of 30 minutes, were added to 985 g of this powder. The mixture thus obtained is ready for application via an electrostatic spray system of the Corona type.

### Example 2 - Preparation of Formulation 2

A sample of single-walled nanotubes (CAS number 308068-56-6) (Nanotube length > 5 µm, nanotube diameter: 1.6 nm, nanotube thickness 0.17 nm) weighing 10 g was dispersed in 90 g of polyethylene wax. The dispersion was effected by means of the extrusion process with a temperature TMP ranging from 105°C to 115°C and subsequently cooled and reduced to granules using a mechanical cutter. The resulting mixture has a nanotube concentration by weight equal to 10%.

Using this mixture as a "nanotube master", a dry mixture of the components was prepared according to the formula indicated hereunder:

**TABLE 3**

| **Component** | **Quantity** |
|---|---|
| Eponac 85 | 325.000 |
| Sirion VP 2081 | 110.500 |
| Deurex E11 | 3.000 |
| Benzoin (CAS 119-53-9) | 4.000 |
| Byk 360P | 10.000 |
| Baristar 8415 | 351.25 |
| Luzenac 10M0 | 37.500 |
| Nubirox 106 | 50.000 |
| Kronos 2090 | 37.500 |
| Powder zinc 4P16 | 25.000 |
| Bayferrox 306 | 10.000 |
| Polyethylene wax | 10.125 |
| SWCNT | 1.125 |

In particular, 11.25 g of "nanotube master" (equivalent to 1.125 g of SWCNT) were dry mixed together with the other components indicated in Table 3, mixing in a turbo mixer at a speed of 1,500 rpm for a time of 4 minutes at a temperature never exceeding 40°C.

The resulting closely-mixed mixture was extruded using a classic twin-screw extruder for powder-coating products with a minimum temperature set of 20°C in the feeding zone which gradually increases up to 120°C in the operating zone and the outlet head (for example according to a 10-zone scheme from 20°C to 60°C, from 60°C to 80°C, from 80°C to 100°C, from 100°C to 120°C and then from 120°C to 100°C, wherein the cold zone at 20°C is the feeding zone whereas the last zone at 100°C is the extruder head from which the molten and mixed material exits), thus obtaining an extruded product with a TMP ranging from 125°C to 135°C. Once extruded, the material was calendered and cooled on a stainless-steel belt cooled with water to 5°C and then reduced to flakes using a rotating mechanical breaker. The material reduced to flakes was subsequently ground with a classic grinding plant (pin mill equipped with a classifier) obtaining an average particle-size distribution equal to:
- D40 = 30 microns
- D90 = 73 microns
- D100 = 100 microns

25 g of lamellar metallic Zinc dry mixed in a slow mixer of the "Viani" type, for a time of 30 minutes, were added to 975 g of this powder. The mixture thus obtained is ready for application via an electrostatic spray system of the Corona type.

The new formulations were compared to the state of the art with respect to the mechanical resistance (important during the handling of painted products), chemical resistance (important with respect to the permeability of the film to the various reagents) and corrosion resistance. Other evaluations were effected relating to the conductivity of the polymerized film in order to evaluate the repaintability of the product and others with respect to the behaviour of the film in seawater regarding the solubility of the metallic Zinc over time.

### Example 3 - Preparation of the composition according to the state of the art

The following composition was prepared according to the state of the art.

**TABLE 4**

| **Component** | **Quantity** |
|---|---|
| Eponac 85 | 325.000 |
| Sirion VP 2081 | 110.500 |
| Deurex E11 | 3.000 |
| Benzoin (CAS 119-53-9) | 4.000 |
| Byk 360P | 10.000 |
| Baristar 8415 | 62.500 |
| Luzenac 10M0 | 37.500 |
| Nubirox 106 | 50.000 |
| Kronos 2090 | 37.500 |
| Powder zinc 4P16 | 200.000 |
| Bayferrox 306 | 10.000 |

In particular, the components (from Eponac 85 to Bayferrox 306) were weighed, mixed in a turbo-mixer at a speed of 1,500 rpm for a time of 4 minutes at a temperature never exceeding 40°C.

The resulting closely-mixed mixture was extruded using a classic twin-screw extruder for powder coating products with a minimum temperature set of 20°C in the feeding zone which gradually increases up to 120°C in the operating zone and the outlet head (for example according to a 10-zone scheme from 20°C to 60°C, from 60°C to 80°C, from 80°C to 100°C, from 100°C to 120°C and then from 120°C to 100°C, wherein the cold zone at 20°C is the feeding zone whereas the last zone at 100°C is the extruder head from which the molten and mixed material exits), thus obtaining an extruded product with a TMP ranging from 125°C to 135°C.

Once extruded, the material was calendered and cooled on a stainless-steel belt cooled with water to 5°C and then reduced to flakes using a rotating mechanical breaker. The material reduced to flakes was subsequently ground with a classic grinding plant (pin mill equipped with a classifier) obtaining an average particle-size distribution equal to:
- D40 = 30 microns
- D90 = 73 microns
- D100 = 100 microns

150 parts by weight of lamellar metal Zinc were added to 850 parts by weight of this powder.

### Example 4 - Treatment of the substrate

3 substrates composed of raw iron and having a surface area of 120 cm² (20cm X 6cm) were each treated with the three formulations previously produced.

In particular, each substrate was subjected to sandblasting treatment using a Corundum-type RB Gr 60 with a final cleanliness degree of Sa2½. The electrostatic corona-type spray painting is effected at room temperature (typically ranging from 5°C to 40°C), a Voltage ranging from 60 to 70 KV and a current ranging from 20 to 30 µA. The sandblasting degree is verified with a roughness comparator (ISO 8503-2) and the verification of the cleanliness degree after sandblasting is effected (according to ISO 8502-3:**2017**).

### Example 5 - Comparative Analyses

In order to compare the characteristics between the compositions according to the present invention (formulations 1 and 2) and the composition according to the state of the art (sample 3), various tests were carried out on the substrates treated by the three samples. The tables hereunder indicate the results of the tests carried out.

**TABLE 5 - MECHANICAL PROPERTIES**

| | **Resistance** to **direct and indirect impact (ISO 6272) (kg*cm)** | **Erichsen drawing (ISO 1520) (mm)** | **Metal adhesion (ISO 2409)** | **Wolf-Wilborg hardness (ASTM 3363** | **Stone Chipping Resistance (ISO 20567** |
|---|---|---|---|---|---|
| Film Coating Example 1 | 90 Kg*cm | 8 mm | GT0 | >2H | <1.5 |
| Film Coating Example 2 | 85 Kg*cm | 8 mm | GT0 | >2H | <1.5 |
| Film Coating Example 3 (State of the art) | 50 Kg*cm | 5 mm | GT0 | H-2H | <2 |

**TABLE 6 - OTHER CHARACTERISTICS**

| | **MEK resistance (ASTM D4752))** | **Salt spray resistance (ISO 9227) (mm) after 1440 h** | **Humidistat (ISO 6227)** | **Surface resistivity (ASTM D257)** | **Zinc leaching in seawater after 21 days** |
|---|---|---|---|---|---|
| Film Coating Example 1 | 190 | < 1 mm | No blistering after 1440 h | 8*10⁴ | 5.4*10⁻⁴ |
| | | | | Ω*cm | g/100 cm³ |
| Film Coating Example 2 | 160 | < 1 mm | No blistering after 1440 h | 9*10⁵ | 6.2* 10⁻⁴ |
| | | | | Ω*cm | g/100 cm³ |
| State of the art | 150 | < 3 mm | Blistering at 1200 h | 8*10⁹ | 3.8*10⁻² |
| | | | | Ω*cm | g/100 cm³ |

### Mechanical Properties - Impact

The substitution of metallic Zinc with filler mixtures, also lamellar, and the presence of carbon nanotubes (fibrous nature) improve the impact resistance performance. The deformation of the film is homogeneously distributed over the entire surface exposed to impact, with no signs of cracking or fissures. The mechanical resistance in terms of impact (measured according to the procedure ISO 6272-1:2011) is almost doubled compared to the state of the art, significantly improving the scratch resistance of the painted carriers, passing in fact from an impact of 50 Kg*cm of the state of the art to an impact value ranging from 85 to 90 Kg*cm of formulations 1 and 2.

### Mechanical properties - drawing

Also in this case, the reinforcing effect given by the lamellar fillers and the presence of carbon nanotubes ensure that the plastic deformation of the surface is more controlled and the cracks on the film appear at higher penetration values. It can in fact be noted that the state of the art provides for a drawing value (measured according to the procedure ISO 1520:2006) equal to 5 mm, whereas formulations 1 and 2 reach a value of 8 mm. A higher drawing value gives formulations 1 and 2 the possibility of being used more easily also on post-forming materials as corrosion inhibitors.

### Mechanical properties - adhesion

The adhesion properties were measured according to the procedure UNI EN ISO 2409:2020. From the results obtained, it is possible to state that these properties are not modified compared to the state of the art: no improvement or worsening can be identified in formulations 1 and 2 regarding this property as it is directly proportional to the type of binder and its quantity in the formula which, for the three compounds tested, are always the same, both in type and in percentage quantity.

### Mechanical properties - surface hardness

The surface hardness of the various samples was measured according to the procedure ASTM 3363 **2022.** From the results obtained, it is possible to state that this property is influenced by the greater presence of Barite in formulations 1 and 2 compared to the state of the art. Barite, having a Mohs hardness higher than that of zinc (3.0-3.5 vs 2.5-3.0), combined with the presence of carbon nanotubes that stiffen the film, contributes to the formation of a polymeric film with a resulting surface hardness higher than the state of the art containing 35% of metallic zinc.

### Mechanical properties - chipping resistance (stone chipping test)

The chipping resistance of the various samples was measured according to the procedure ISO 20567:**2017**.

Formulations 1 and 2 show higher performances compared to the composition of the state of the art due to the greater surface hardness and the capacity of the polymer film of formulations 1 and 2 to be deformed more homogeneously (as also demonstrated in the impact tests).

### Chemical properties: resistance to rubbing with solvents - resistance to methyl ethyl ketone (MEK)

The MEK resistance of the various samples was measured according to the procedure ASTM D4752-**2020**. The tests conducted show an improvement in terms of resistance to solvent attack compared to the state of the art. This feature can be found in the replacement of zinc particles (both extruded and post-mixed) with particles of filling agents which, due to their size, chemical nature and shape, make the film more compact and waterproof and due to the presence of carbon nanotubes. The lower permeability of the film to external agents means that it is possible to increase the resistance to the attack of organic solvents (according to ASTD D4752-**2020** as the quantity of nanotubes used in the formulation increases. This is because the presence of this material creates a barrier effect due to the orientation that the nanotubes acquire within the polymerized film, as verified by analysis using an optical scanning microscope - SEM (see Figure 1 and in particular Figure 1b, wherein the filaments of nanotubes that intersect in the polymer matrix can be noted).

### Anti-corrosion properties - salt spray resistance

The salt spray resistance of the various samples was measured according to the procedure UNI EN ISO 9227:**2017** after 1,440 hours of exposure.

The tests carried out on formulations 1 and 2 show a clear improvement in corrosion resistance compared to the state of the art as the presence of carbon nanotubes, in fact, creates a conductive network that puts many more "sacrificial" zinc particles in contact with respect to traditional products where the electrical conductivity between the substrate and the sacrificial zinc is guaranteed only by the presence of large quantities of metallic zinc. In this way, it is possible to make the electronic exchange between the coated metal substrate and the sacrificial metallic zinc particles more efficient and, consequently, the relative redox process of the sacrificial metal (despite the smaller quantity present in the formula).

### Anti-corrosion properties - humidistat:

The humidity resistance of the various samples was measured according to the procedure ISO 6227-1982.

Also for this type of test, formulations 1 and 2 provide an improvement compared to the state of the art. This is because the combination of a better cathodic protection effect and a better barrier effect ensures that continuous exposure to a humidity level of 100% at 40°C has a lesser impact on the carrier compared to the state of the art. This is because a smaller quantity of H₂O is able to permeate through the film and, in the event of permeation, a better electrochemical "defense" reduces the formation of oxides and gases responsible for the surface blistering that appears on organic coatings.

### Conductive properties - surface resistivity

The ELECTRICAL resistance of the various samples was measured according to the procedure ASTM D257:**2021**.

The tests carried out on formulations 1 and 2 demonstrate how the presence of nanotubes makes the product not only dissipative, but actually conductive, giving the coated material the property of being able to be re-coated with a second coat of organic coating much more easily compared to the state of the art. The electrical conductivity of the coating therefore improves the yield of the redox process of the sacrificial zinc and also improves the repaintable nature of the piece, by not electrically isolating it from the earthed support.

### Ecological properties - zinc leaching in seawater

Tests were carried out for characterizing the ecological characteristics of formulations 1 and 2 compared to the formulation of the state of the art. In particular, zinc-leaching analyses were effected in a solution simulating seawater. The salt content in 1 dm³ of said solution (based on the composition of seawater according to Peter Atkins, Loretta Jones General Chemistry Molecular Reactions and Materials, 2014) is as follows: 27.21 g NaCl; 3.81 gMgCl₂; 1.66 g MgSO₄; 1.26 g CaSO₄; 0.86 g K₂SO₄; 0.12 g CaCO₃, 0.08 g MgBr₂.

In particular, tests were carried out on the content of zinc leached from powder paint coatings for the 3 different coatings described above (4 samples for each coating for a total of 12 samples).

The tests on zinc leaching from coatings were effected by completely immersing each sample in 100 cm³ of seawater having a conventional composition. The tests were carried out in 3 steps:
- Step I: The study was carried out for 7 days at room temperature. After this time, measurements of the zinc released in solution were effected using the FAAS method;
- Step II: The samples were again immersed in a fresh portion of seawater. The study was carried out for 7 consecutive days at room temperature. After this time, measurements of the zinc released were effected using the FAAS method.
- Step III: The samples were again immersed in a fresh portion of seawater. The study was carried out for 14 consecutive days at room temperature. After this time, measurements of the zinc released were effected using the FAAS method.

The measurements were carried out on a Perkin Elmer 3100 atomic absorption spectrometry apparatus. The determination of the zinc was effected for the following conditions:
- analytical wavelength: 214 +/- 0.7 nm;
- sensitivity: 0.018 mg/dm³;
- linear range: 1.0 mg/dm³;
- concentrations of the standard solutions used: 1.0, 3.0, 5.0, 6.0 mg/dm³.

As can be seen from Table 7, the tests of the coatings obtained from formulations 1 and 2 show a significant reduction (even equal to two orders of magnitude after 21 days of immersion) of the quantity of zinc released into seawater compared to the coating produced according to the state of the art. This is because the lower concentration of zinc slows down the extraction process of the metal from the polymeric film (consequently transferring a smaller quantity of hazardous material into the environment). Furthermore, it can be noted how the content of leached zinc does not depend on the content of SWCNTs or on the dispersion method of the same.

**TABLE 7**

| **Sample** | **zinc (g) per 100 cm³ of solution** | | | |
|---|---|---|---|---|
| | **Step I** | **Step II** | **Step III** | **Sum of Steps I to III** |
| Coating State of the art | 1.5·10⁻² | 1.2·10⁻² | 1.1·10⁻³ | 3.8·10⁻² |
| Film Coating Example 1 | 4.0·10⁻⁴ | 8.3·10⁻⁵ | 5.3·10⁻⁵ | 5.4·10⁻⁴ |
| Film Coating Example 2 | 4.2·10⁻⁴ | 1.3·10⁻⁴ | 7.3·10⁻⁵ | 6.2·10⁻⁴ |

### Example 6 - Comparison between a coated product according to the present invention and a coated product according to the state of the art with a pre-gelling step.

In order to compare the characteristics between the compositions according to the present invention (formulations 1 and 2) wherein the top-coat was applied without a pre-gelling step (see Example 4) and the compositions according to the present invention (formulations 1 and 2) wherein the top-coat was applied with a pre-gelling step as required by the state of the art, i.e. with the top-coat applied after a pre-gelling step of the primer, the data relating to the mechanical properties and other characteristics are indicated in the following Tables 8 and 9.

**TABLE 8 - MECHANICAL PROPERTIES**

| | Resistance to direct and indirect impact (ISO 6272) (kg*cm) | Erichsen drawing (ISO 1520) (mm) | Metal adhesion (ISO 2409) | Wolf-Wilborg hardness (ASTM 3363) | Stone chipping resistance (ISO 20567) |
|---|---|---|---|---|---|
| Film Coating Example 1: top-coat application on primer without pre-gelling step | 90 Kg*cm | 8 mm | GT0 | >2H | <1.5 |
| Film Coating Example 2: top-coat application on primer without pre-gelling step | 85 Kg*cm | 8 mm | GT0 | >2H | <1.5 |
| Film Coating Example 1: top-coat application on primer with pre-gelling step (state of the art) | 89 Kg*cm | 8 mm | GT0 | >2H | <1.5 |
| Film Coating Example 2: top-coat application on primer with pre-gelling step (state of the art) | 85 Kg*cm | 8 mm | GT0 | >2H | <1.5 |

**TABLE 9 - OTHER CHARACTERISTICS**

| | MEK resistance (ASTM D4752) | Salt spray resistanc e (ISO 9227) (mm) after 1440 h | Humidistat (ISO 6227) | Surface resistivity (ASTM D257) | Zinc leaching in sea water after 21 days |
|---|---|---|---|---|---|
| Film Coating Example 1: top-coat application on primer without pre-gelling step | 190 | < 1 mm | No blistering after 1440 h | 8*10⁴ Ω*cm | 5,4*10⁻⁴ g/100 cm³ |
| Film Coating Example 2: top-coat application on primer without pre-gelling step | 160 | < 1 mm | No blistering after 1440 h | 9*10⁵ Ω*cm | 6,2*10⁻⁴ g/100 cm³ |
| Film Coating 1 Example 1: PREGEL application method (State of the art) | 189 | < 1 mm | No blistering after 1440 h | 8*10⁴ Ω*cm | 5,4*10⁻⁴ g/100 cm³ |
| Film Coating Example 2: top-coat application on primer with pre-gelling step (state of the art) | 162 | < 1 mm | No blistering after 1440 h | 9.8*10⁵ Ω*cm | 6,1*10⁻⁴ g/100 cm³ |

As can be seen from Tables 8 and 9, the values relating to the properties indicated in said tables do not vary with the application method, thus allowing it to be concluded that the absence of the pre-gelling step does not affect the final performance of the coated product in any way.

As indicated in Example 4, the substrates composed of raw iron and having a surface area of 120 cm² (20cm X 6cm) were each treated with the formulations produced in Examples 1 and 2.

In particular, each substrate was subjected to sandblasting treatment using a Corundum type RB Gr 60 with a final cleanliness degree equal to Sa2½. Electrostatic corona spray painting was carried out at room temperature (typically ranging from 5°C to 40°C), with a voltage ranging from 60 to 70 KV and a current ranging from 20 to 30 µA. The sandblasting degree is verified with a roughness comparator (ISO 8503-2) and the cleaning degree after sandblasting is verified (according to ISO 8502-3).

The application thickness of the primer formulations, i.e. the compositions (CO) according to the present invention, typically ranges from 50µm to 80µm. The thickness depends on the chain speed and the powder flow-rate which are non-indexable values as they are typical of each application plant and dependent on numerous parameters such as: geometry of the carrier, catenary speed, number of electrostatic guns, speed of the reciprocators.

The top-coat was applied with the same settings as the primer, i.e. with the same application settings as the formulations according to Examples 1 and 2 with respect to voltage and current, the powder flow-rate and the chain speed are adjusted to obtain the thickness that is desired as the final value, typically ranging from 100 to 250 microns..

In the examples indicated in the previous Tables 8 and 9, the thickness of the primer ranged from 80 to 90 microns, whereas the thickness of the top-coat applied ranged from 90 to 100 microns. The total thickness of all the samples (primer + top-coat) ranged from 160 to 170 microns.

In the examples according to the state of the art, the intermediate pre-gelling step was carried out by heating to 100°C for 15 minutes.

The final baking step, whose conditions substantially depend on the top-coat applied, in the case of the examples reported in Tables 8 and 9 was carried out at a temperature of 180°C for 12 minutes.

### Example 7 - further application tests of the top-coating

Some application examples of the formulation of Example 1 as primer are indicated hereunder and specifically describe the process necessary for obtaining a final coating with a top-coat that is applied without the need for implementing the intermediate pre-gelling step, provided by the state of the art.

The formulation or primer of Example 1 was applied manually, with a dense-phase GEMA gun, on different surfaces:
2 phosphated Fe panels
2 Galvanized panels
2 Electrogalvanized panels
2 Stainless-steel panels

The application parameters of the formulation or primer of Example 1 were the following:
Voltage: 80 kV
Current: 20 µA
Powder flow-rate: 60 nm³/h
Air: 3.00 nm³/h.

GEMA dense-phase guns are guns that supply powder that is pumped through an almost "airless" system: much more powder is therefore moved using a significantly lower air flow-rate with respect to a traditional application. This application technique allows a more homogeneous quantity of powder to be deposited on the carrier, almost completely eliminating dust-removal phenomena from the carrier due to the pressure of the supply air when the guns approach the carrier, for example in those areas where it is necessary to insist more in order to have a good penetration of the paint (Faraday cage).

The powder of the formulation of Example 1 was supplied without finding anomalies, obtaining a dry thickness of 50-60µm.

The application of the top-coat, i.e. a coat of matt white Polyester HAA class 1, was carried out on line, a horizontal painting booth with 6 GEMA guns per side (DENSE PHASE), plus an anthropomorphic robot in pre-retouching and two manual stations in post-retouching.

All the reciprocators were used, plus a pre-retouching and post-retouching station, set as follows:

### PRE-RETOUCHING MANUAL

Chain speed: 2.00 m/min.
Voltage: 80 kV
Current: 20 µA
Powder flow-rate: 38 nm³/h
Air: 3.000 nm³/h

GROUP B (RECIPROCATORS)
Chain speed: 2.00 m/min.
Voltage: 70 kV
Current: 15 µA
Powder flow-rate: 34 nm³/h
Air: 4.500 nm³/h

GROUP C (RECIPROCATORS)
Chain speed: 2.00 m/min.
Voltage: 70 kV
Current: 20 µA
Powder flow-rate: 34 nm³/h
Air: 4.500 nm³/h

POST-RETOUCHING MANUALS
Chain speed: 2.00 m/min.
Voltage: 80 kV
Current: 20 µA
Powder flow-rate: 28 nm³/h
Air: 3.200 nm³/h

During the top-coat application steps, no anomalies arose, the powder adhered well to the carrier painted with the primer or formulation of Example 1.

At the end of the baking cycle, the panels treated with the primer or formulation of Example 1 and with the above-mentioned top-coat appear to have a homogeneous finish, free from contamination deriving from a potential migration of the primer or formulation of Example 1.

The final baking step was carried out at a temperature of 180°C for 20 minutes.

The total thicknesses were 110-120µm and the gloss and colour were in line with those obtained for the same panel painted with the top-coat, in the absence of primer, i.e. the formulation of Example 1. The adhesion of the top-coat, i.e. the matt white PE finishing coat, on the painted product with the formulation of Example 1 as primer was also tested and the adhesion degree was excellent.

The carriers painted with the application of the primer or formulation of Example 1 and with the application of the top-coat indicated above directly on the primer, subjected to a single baking cycle after the two applications are the following:
- 1 panel in phosphated Fe + primer of Example 1 + finishing coat of matt white PE;
- 1 Galvanized panel + primer of Example 1 + finishing coat of matt white PE;
- 1 Electrogalvanized panel + primer of Example 1 + finishing coat of matt white PE;
- 1 Stainless Steel panel + primer of Example 1 + finishing coat of matt white PE.

These panels were subjected to a neutral salt spray test cycle and were evaluated after 720 h and 1440 h of exposure to neutral salt spray according to the following parameters (in accordance with the Qualisteelcoat specification version 4.3:2023-07*):
- blistering degree in accordance with the standard DIN EN ISO 4628-2:2016-07*: 0(S0)
- rusting degree in accordance with the standard DIN EN ISO 4628-3:2016-07*:Ri 0
- cracking degree in accordance with the standard DIN EN ISO 4628-4:2016-07*: 0(S0)
- flaking degree in accordance with the standard DIN EN ISO 4628-5:2023-03*: 0(S0)
- cross-cut value in accordance with the standard DIN EN ISO 2409:2020-12*: 0 or 1;
- delamination according to DIN EN ISO 4628-8:2013-05*: d ≤ 3 mm on steel d ≤ 8 mm on galvanized substrates;
- corrosion according to DIN EN ISO 4628-8:2013-05*: c ≤ 1 mm (for C5 ≤ 2 mm)
obtaining the results indicated in Table 10:

**TABLE 10**

| Panel | Blistering 720h/1440h | Rusting 720h/1440h | Cracking 720h/1440h | Flaking 720h/1440h | Cross-Cut 720h/1440h | Delamination 720h/1440h | Corrosion 720h/1440h |
|---|---|---|---|---|---|---|---|
| phosphated Fe panel + primer Example 1 + finishing coat of matt white PE; | 0/0 | Ri0/Ri0 | 0/0 | 0/0 | GTO/GTO | 1mm/2mm | 0.5mm/1mm |
| Galvanized panel + primer Example 1 + finishing coat of matt white PE; | 0/0 | Ri0/Ri0 | 0/0 | 0/0 | GTO/GTO | 1mm/5mm | Omm/Omm |
| Electrogalvanize d panel + primer Example 1 + finishing coat of matt white PE; | 0/0 | Ri0/Ri0 | 0/0 | 0/0 | GTO/GTO | 1mm/4mm | Omm/Omm |
| Stainless steel panel + primer Example 1 + finishing coat of matt white PE | 0/0 | Ri0/Ri0 | 0/0 | 0/0 | GTO/GTO | 1.5mm/4.5m m | Omm/Omm |

These results demonstrate that the application of the top-coat directly on the primer, without any intermediate pre-gelling step, i.e. with the application method according to the present invention, allows a final product with optimal characteristics to be obtained.

More specifically, the results indicated in Table 10 refer to the corrosion-resistance characteristics of products exposed to environments with different corrosiveness classes. In particular, for the most severe class (class c5h in accordance with the Qualisteelcoat specification version 4.3:2023-07*), the blistering, rusting, cracking, flaking and cross-cut adhesion results are the best possible: the maximum score expected is in fact zero and all the results indicated in Table 10 for the products according to the invention are equal to zero.

This means that all the systems applied, tested on carriers l placed in an environment with corrosiveness class c5h, show the maximum performance achievable and certifiable. Also with respect to the corrosion penetration and delamination of the carrier after salt spray tests, the results obtained are close to the maximum limit achievable and certifiable.

## Claims

1. A composition (CO) comprising or consisting of
• an epoxy resin having an EEW value (epoxy equivalent weight) ranging from 400 to 950;
• at least one additive (AD) consisting of carbon nanotubes;
• a curing agent;
• metallic zinc and,
• optionally, one or more additional additives selected from the group consisting of pigments, degassing agents, anti-crater agents, dispersing agents, filling agents, corrosion inhibitors other than metallic zinc, accelerating agents, glass flakes and mixtures thereof,
wherein the weight concentration of metallic zinc with respect to the total weight of the composition (CO) ranges from 2.5 to 15%, more preferably from 2.75 to 10%, even more preferably from 3 to 5%.

2. The composition (CO) according to claim 1, wherein said epoxy resin has an EEW value ranging from 600 to 850.

3. The composition (CO) according to one of the previous claims, wherein the epoxy resin has a kinematic viscosity that ranges from 370 to 550 mm²/s, more preferably from 400 to 500 mm²/s, even more preferably equal to 470 mm²/s, and/or a density that ranges from 0.5 to 2 g/cm³, more preferably from 1.15 to 1.20 g/cm³.

4. The composition (CO) according to one of the previous claims, wherein the quantity by weight of said additive (AD) with respect to the total weight of the composition (CO) ranges from 0.01 to 2.5%, more preferably from 0.05 to 1.5%.

5. The composition (CO) according to one of the previous claims, wherein said additive (AD) is composed of single-walled carbon nanotubes.

6. The composition (CO) according to claim 5, wherein said single-walled nanotubes have:
• a diameter ranging from 1 to 5 nm, more preferably from 1.2 to 2.0 nm, even more preferably equal to 1.6 nm and/or
• a length greater than 5 micrometers, more preferably ranging from 10 to 40 micrometer and/or
• a wall thickness ranging from 0.15 to 0.40 nm and/or
• a maximum size of the agglomerates not exceeding 500 µm and/or
• a total fraction of the agglomerates not exceeding 0.04% by weight with respect to the total weight of the composition (CO) and/or
• a resistivity, tested in an LDPE matrix comprising single-walled carbon nanotubes in a quantity equal to 0.1% by weight with respect to the total weight of the matrix and with a melt flow index equal to 20, ranging from 5*10^4 - 5*10^6 ohm*cm.

7. The composition (CO) according to one of the previous claims, wherein:
• the epoxy resin has an EEW value that ranges from 600 to 850;
• the weight concentration of the additive (AD) with respect to the total weight of the composition (CO) ranges from 0.05 to 1.5% and said additive is composed of single-walled carbon nanotubes;
• the weight concentration of the curing agent with respect to the total weight of the composition (CO) is within the range of 11-13%;
• the weight concentration of metallic zinc with respect to the total weight of the composition (CO) ranges from 3 to 5%

8. A process for preparing the composition (CO) according to claims 1-7, wherein said process comprises the following steps:
a) dispersing the additive (AD), preferably consisting of single-walled carbon nanotubes, optionally together with a dispersing agent, preferably a wax, even more preferably amide wax and/or polyethylene wax, in a molten or liquid epoxy resin;
b) mixing so as to obtain a homogeneous mixture (M);
c) optionally, adding to the homogeneous mixture (M) obtained in step a) a further portion of epoxy resin in solid form so that the total EEW value of the epoxy resin introduced in step a) ranges from 400 to 950, more preferably from 600 to 850;
d) cooling the homogeneous mixture (M) obtained until it solidifies;
e) dry mixing an epoxy resin together with a curing agent, the solid homogeneous mixture (M) and powdered metallic zinc and, optionally, one or more further additives selected from the group consisting of pigments, degassing agents, anti-crater agents , dispersing agents, filling agents, corrosion inhibitors other than metallic zinc, accelerating agents, glass flakes and mixtures thereof until a homogeneous mixture is obtained (MD);
f) hot-extruding the mixture (MD) obtained in the previous step and, optionally, subjecting it to calendering;
g) cooling and grinding the extruded homogeneous mixture (MD);
h) adding lamellar metallic zinc to the ground homogeneous mixture (MD) in such a quantity that the total concentration of metallic zinc by weight with respect to the total weight of the composition (CO) ranges from 2.5 to 15%, more preferably from 2.75 to 10%, even more preferably from 3 to 5%.

9. A process for preparing the composition (CO) according to claims 1-7, wherein said process comprises the following steps:
a) dispersing the additive (AD), preferably consisting of single-walled carbon nanotubes, together with a dispersing agent, preferably a wax, even more preferably amide wax and/or polyethylene wax, in a molten epoxy resin;
b) mixing the dispersion obtained under heat;
c) cooling and grinding the extruded dispersion;
d) adding the dispersion obtained in step c) to a premix comprising an epoxy resin, a curing agent, metallic zinc and, optionally, one or more further additives selected from the group consisting of pigments, degassing agents, anti-crater agents, dispersing agents, filling agents, corrosion inhibitors other than metallic zinc, accelerating agents, glass flakes and mixtures thereof;
e) hot-extruding the mixture (MD) obtained in the previous step and, optionally, subjecting it to calendering;
f) cooling and grinding the extruded homogeneous mixture (MD);
g) adding lamellar metallic zinc to the ground homogeneous mixture (MD) in such a quantity that the total concentration of metallic zinc by weight with respect to the total weight of the composition (CO) ranges from 2.5 to 15%, more preferably from 2.75 to 10%, even more preferably from 3 to 5%.

10. A coating method for imparting anti-corrosion properties to a substrate, preferably of a metallic type, wherein said method comprises a step wherein at least a part of the surface of the substrate is treated with a composition (CO) according to claims 1-7.

11. The coating method according to claim 10, wherein said method comprises a step for applying a top-coat wherein said part of the substrate surface is further treated with a composition (CO) according to claims 1-7 directly on the composition (CO) applied in the previous step without any intermediate heat treatment.

12. A substrate, preferably of a metallic type, at least partly coated with a composition (CO) according to claims 1-7 obtainable with the method according to claims 10 and 11.
